# EUROPÄISCHE PATENTANMELDUNG

(11) **EP 1 308 656 A2**
(43) Veröffentlichungstag der Anmeldung: **07.05.2003**
(21) Anmeldenummer: 02019422.1
(22) Anmeldetag: 30.08.2002
(51) Int. Cl.: F16K 3/06

(54) **Absperrschieber für insbesondere pneumatische Förderleitungen**

(30) Priorität: 30.10.2001 DE 20117737 U
(71) Anmelder: Höcker Polytechnik GmbH, 49176 Hilter (DE)
(72) Erfinder: Höcker, Frank, 49076 Osnabrück (DE); Kolks, Jochem, 46399 Bocholt (DE); Kolks, Thomas, 46399 Bocholt (DE)
(74) Vertreter: Engelmann, Kristiana, Dipl.-Ing.

(57) **Zusammenfassung**

Die Erfindung betrifft einen Absperrschieber für insbesondere pneumatische Förderleitungen von beispielsweise Späneabsauganlagen mit einem einander zugeordnete Leitungsanschlüsse (4,5) aufweisenden Gehäuse (2), an dem ein motorisch, pneumatisch oder manuell betätigbares aus einer einen Leitungsanschluß freigebenden Offenstellung in einer einen Leitungsanschluß absperrende Schließstellung überführbares Absperrelement (6) gehaltert ist, wobei das Absperrelement schwenkbar an dem Gehäuse (2) mit einer außerhalb der Leitungsanschlüsse (4,5) gelegenden Schwenkachse (8) gehaltert ist.

## Beschreibung

Die Erfindung bezieht sich auf einen Absperrschieber für insbesondere pneumatische Förderleitungen von beispielsweise Späneabsauganlagen mit einem einander zugeordnete Leitungsanschlüsse aufweisenden Gehäuse, an dem ein motorisch, pneumatisch oder manuell betätigbares, aus einer einen Leitungsanschluß freigebenden Offenstellung in einer einen Leitungsanschluß absperrende Schließstellung überführbares Absperrelement gehaltert ist.

Absperrschieber herkömmlicher Bauart haben translatorisch bewegbare Absperrelemente, die zum Verschließen eines Leitungsanschlusses in den Leitungsquerschnitt unter Freigabe des Leitungsanschlusses hineinzuschieben und aus dem Leitungsquerschnitt wieder heraus zu schieben sind. Damit geht der Nachteil einher, daß das Absperrelement insbesondere in der Offenstellung des Leitungsanschlusses in dem Bereich neben den Leitungen hineinragt und äußeren Einflüssen ausgesetzt ist, was das Risiko einer Funktionsbeeinträchtigung des Absperrelementes mit sich bringt.

Es ist Aufgabe der vorliegenden Erfindung, einen Absperrschieber der eingangs genannten Art zur Verfügung zu stellen, mit dem Leitungsanschlüsse sicher freizugeben und abzusperren sind, jedoch das Absperrelement wesentlich geringeren äußeren Störeinflüssen ausgesetzt ist.

Zur Lösung dieser Aufgabe zeichnet sich der Absperrschieber der eingangs genannten Art dadurch aus, daß das Absperrelement schwenkbar an dem Gehäuse mit einer außerhalb der Leitungsanschlüsse gelegenen Schwenkachse gehaltert ist.

Damit ist ein Absperrschieber zur Verfügung gestellt, der mit seiner Schwenkachse nahe, jedoch außerhalb des Leitungsanschlusses durch eine Schwenkbewegung über einen begrenzten Winkelbereich aus einer Offenstellung in eine Schließstellung und zurück zu überführen ist.

Zudem ist auf bauliche einfache Weise zu realisieren, daß dem Absperrelement zwei Leitungsanschlüsse in dem Gehäuse zuzuordnen sind, so daß in der Offenstellung eines Leitungsanschlusses parallel ein anderer paralleler Leitungsanschluß zu verschließen ist.

Nach einer besonders bevorzugten Ausführungsform weist der Absperrschieber ein Gehäuse auf, das im wesentlichen oval gestaltet ist und einen ovalen Grundriß aufweist. Bei dieser ovalen Bauform des Gehäuses ist das Absperrelement innerhalb des Gehäuses vorzusehen, wobei dieses Gehäuse freizügig mit Rohrleitungen zu verbinden ist. Die Schwenkbewegung des Absperrelements erfolgt innerhalb des Gehäuses, so daß das Absperrelement nicht mehr in von außen her zugängliche Räume während seiner verschiedenen Schwenkstellungen hineinragt und mithin geschützt angeordnet ist. Dabei ist zweckmäßigerweise ein motorischer Antrieb mittig anzuordnen, so daß eine beliebige Ausrichtung des Gehäuses bei der Installation in Rohrleitungen erfolgen kann.

Das Gehäuse ist bevorzugtermaßen geschlossen, was zu einer hohen Gehäusestabilität führt und darüber hinaus dafür sorgt, daß keine Falschluftansaugung erfolgt.

Die Schwenkachse des Absperrelementes ist bevorzugtermaßen in einem Bereich in der mittleren Längsmittelvertikalebene des ovalen Gehäuses gelegen, und zwar etwas unterhalb eines Rohrleitungsanschlusses.

Ein Absperrelement kann direkt über einen Getriebemotor angetrieben sein, wodurch sich auch ein hohes Drehmoment beim Schließen ergibt im Gegensatz zu bislang üblichen Federrückstellmotoren.

Ein Motor kann wahlweise von vorn oder von hinten an dem Gehäuse angeflanscht sein. Falls notwendig, kann freizügig auch noch ein weiterer Motor vorgesehen werden, um die Antriebskraft zu vergrößern, was sich insbesondere bei sehr hohen Unterdrücken in langen Förderleitungen positiv auswirkt.

Darüber hinaus ist es möglich, den Absperrschieber auch gleichzeitig als Weiche auszuführen, indem neben einem ersten Leitungsanschlußpaar direkt daneben ein zweites Leitungsanschlußpaar vorhanden ist, so daß das Absperrelement sowohl dem einen als auch dem anderen Leitungsanschlußpaar zuzuordnen ist.

Mit einem solchen Gehäuse lassen sich auch verschiedene Leitungsquerschnitte bei ansonsten übereinstimmenden Gehäuseabmessungen erzielen, wobei nur der Durchmesser des jeweiligen Leitungsschlusses zu verändern ist.

Bevorzugtermaßen verfügt das Absperrelement über eine sechseckige Antriebswelle, so daß das Absperrelement auf dieser Antriebswelle gegen Verdrehen gesichert vorgesehen werden kann. Das Gehäuse und das Absperrelement sind vorzugsweise aus Stahlblech, einem rostfreien Edelstahl oder aus Aluminium gefertigt.

Die einzelnen Gehäusehälften können vernietet aber auch miteinander verschraubt sein. Gleichfalls können in einem Teilbereich eine oder mehrere Aussparungen vorhanden sein, durch die eventuell sich im Hohlraum festsetzender Staub austreten kann und bei der eine Gummidichtung eine Falschluftansaugung verhindert.

Die Betätigung des Absperrelementes kann selbstverständlich auch mittels eines Riegels auf manuelle Weise erfolgen oder auch beispielsweise pneumatisch oder hydraulisch eingeleitet werden.

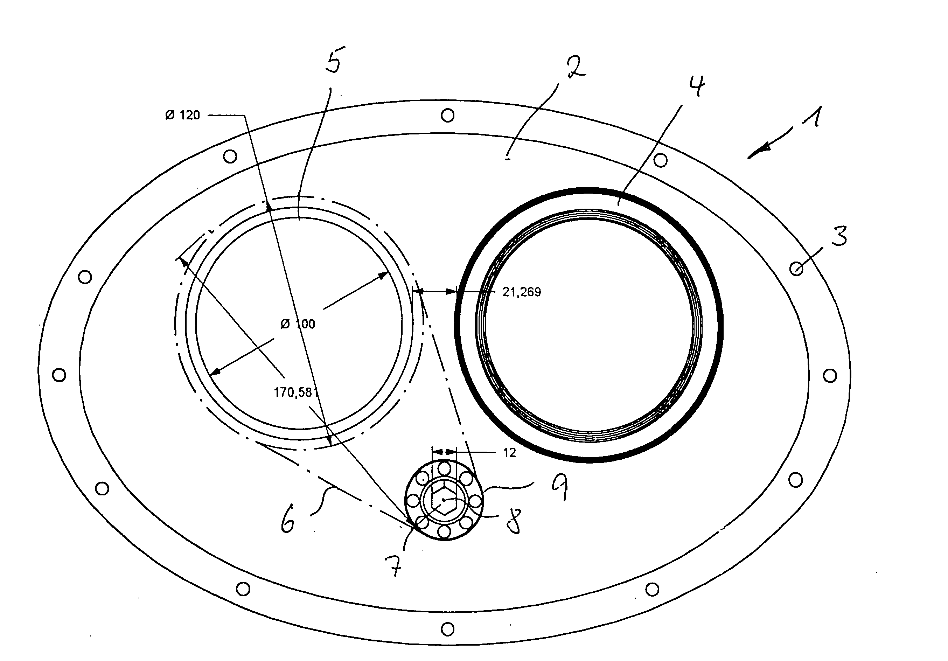

Weitere Ausgestaltungen der Erfindung ergeben sich aus der nachfolgenden Beschreibung und der Zeichnung. In der Zeichnung ist ein Ausführungsbeispiel dargestellt.

Allgemein mit 1 ist ein Absperrschieber beziffert, der ein zweischaliges Gehäuse 2 aufweist. Über die Verbindungsstellen 3 sind die beiden Schalen des Gehäuses 2 miteinander zu verbinden.

Der Absperrschieber in dem gezeigten Ausführungsbeispiel ist als Weiche ausgebildet und hat zwei nebeneinander angeordnete Leitungsanschlüsse 4 und 5, die jeweils von einem strichpunktiert angedeuteten Absperrelement 6 freizugeben oder zu verschließen sind.

Das Absperrelement 6 ist auf einer Sechskantwelle 7 gelagert und um dessen Längsmittelachse 8, die auch gleichzeitig die Schwenkachse des Absperrelementes 6 ist, schwenkbeweglich gelagert.

Bevorzugtermaßen erfolgt die Verschwenkbewegung über einen Motor 9, der mithin mittig zwischen den beiden Leitungsanschlüssen 4 und 5 und etwas unterhalb von diesen angeordnet ist, so daß auch die Schwenkachse 8 etwas unterhalb der beiden Leitungsanschlüsse und zwar in der mittleren Vertikalebene des ansonsten ovalen Gehäuses 2 gelegen ist.

## Patentansprüche

1. Absperrschieber (1) für insbesondere pneumatische Förderleitungen von beispielsweise Späneabsauganlagen mit einem einander zugeordnete Leitungsanschlüsse (4, 5) aufweisenden Gehäuse (2), an dem ein motorisch, pneumatisch oder manuell betätigbares aus einer einen Leitungsanschluß freigebenden Offenstellung in einer einen Leitungsanschluß absperrende Schließstellung überführbares Absperrelement (6) gehaltert ist, **dadurch gekennzeichnet, daß** das Absperrelement (6) schwenkbar an dem Gehäuse (2) mit einer außerhalb der Leitungsanschlüsse (4, 5) gelegenden Schwenkachse (8) gehaltert ist.

2. Absperrschieber nach Anspruch 1, **dadurch gekennzeichnet, daß** das Gehäuse (2) einen im wesentlichen ovalen Grundriß aufweist.

3. Absperrschieber nach Anspruch 1 oder 2, **dadurch gekennzeichnet, daß** die Schwenkachse (8) des Absperrelementes (6) in einer das Gehäuse (2) mittig schneidenden Vertikalebene gelegen ist.

4. Absperrschieber nach einem der Ansprüche 1 bis 3, **dadurch gekennzeichnet, daß** das Gehäuse (2) als geschlossenes Gehäuse mit integriertem Absperrelement (6) ausgebildet ist.

5. Absperrschieber nach einem der Ansprüche 1 bis 4, **dadurch gekennzeichnet, daß** das Gehäuse (2) einen weiteren Leitungsanschluß (5) als Einlaß und/oder Auslaß aufweist und das Absperrelement (6) sowohl dem einen (4) als auch dem anderen Leitungsanschluß (5) zugeordnet ist.

6. Absperrschieber nach einem der Ansprüche 1 bis 5, **dadurch gekennzeichnet, daß** das Absperrelement (6) auf eine Antriebswelle (7) eines Getriebemotors (9) aufsteckbar ist.

7. Absperrschieber nach Anspruch 6, **dadurch gekennzeichnet, daß** der Antriebsmotor (9) von außen auf das Gehäuse (2) aufsetzbar ist und mit seiner Antriebswelle (7) in das Gehäuse hineinragt.

8. Absperrschieber nach Anspruch 6 oder 7, **dadurch gekennzeichnet, daß** die Antriebswelle (7) sechseckig ausgebildet ist.

9. Absperrschieber nach einem der Ansprüche 6 bis 8, **dadurch gekennzeichnet, daß** dem Absperrelement (6) ein weiterer Motor zugeordnet ist, und die Motoren gegenüberliegend angeordnet sind.
